# EUROPEAN PATENT APPLICATION

(11) **EP 3 757 836 A1**
(43) Date of publication of application: **30.12.2020**
(21) Application number: 18906954.5
(22) Date of filing: 13.12.2018
(51) Int. Cl.: G06F 21/57

(54) **SECURITY EVALUATION SERVER AND SECURITY EVALUATION METHOD**

(30) Priority: 21.02.2018 JP 2018028887
(71) Applicant: Hitachi, Ltd., Tokyo 100-8280 (JP)
(72) Inventor: CHEN Yiwen, Tokyo 100-8280 (JP); KAI Satoshi, Tokyo 100-8280 (JP); ANDO Eriko, Tokyo 100-8280 (JP); MINE Hiroshi, Tokyo 100-8280 (JP); IIMURO Satoshi, Tokyo 100-8280 (JP); KAWAGUCHI Takamasa, Tokyo 100-8280 (JP)
(74) Representative: Mewburn Ellis LLP
(86) International application number: PCT/JP2018/045824
(87) International publication number: WO 2019/163266

(57) **Abstract**

The present invention provides a security evaluation server including: a hierarchy generation unit configured to generate information regarding a plurality of system hierarchies in an evaluation subject system; an evaluation unit configured to, based on the information regarding the plurality of system hierarchies generated by the hierarchy generation unit, calculate an evaluation value of protection effectiveness based on a security function requirement included in each of the plurality of system hierarchies in the evaluation subject system, and calculate an evaluation value of protection effectiveness based on a combination of the security function requirements; and a verification unit configured to verify whether each of the security function requirements in the evaluation subject system is in excess or insufficient, based on each of the evaluation values calculated by the evaluation unit and a target value.

## Description

### Technical Field

The present invention relates to a security evaluation server and a security evaluation method.

### Background

There is known a functional safety evaluation, such as ISO61508 or ISO26262, to achieve functional safety. Similarly, there is known a security evaluation, such as IEC62443 or ISO15408, to achieve cyber security.

In view of the functional safety, a failure occurrence rate of a hardware component or service life of the hardware component may cause a reduction in the functional safety level over time elapsed from manufacturing of the hardware component. Similarly, in view of the cyber security, emergence of new viruses one after another or risk of constant use of same password may cause a reduction in the security level over time elapsed from new construction of an information system.

With regard to the time elapsed from the manufacturing of the hardware component and the time elapsed from the new construction of the information system, PTL 1 discloses a technique to accurately grasp a trend of a change in a security level SL of each of a plurality of security functions in the information system, the change in accordance with time elapsed from the construction of the information system (when the security level SL was predetermined). In the technique, time elapsed from downtime of the security is measured at a predetermined frequency and the security level SL of each of the plurality of security functions is calculated. In the technique disclosed here, the security level SL is converted within a range of all of the plurality of security functions to calculate a security level SLG of the overall information system. Then, the security level SLG of the overall information system calculated at each time is outputted to be displayed in a graph.

### Citation List

### Patent Literature

PTL 1: JP 2008-176634 A

### Summary

### Technical Problem

In the technique disclosed in PTL 1, it is possible to evaluate the security level in accordance with the time elapsed from the manufacturing of the hardware component and the time elapsed from the construction of the information system. However, in a system where the information system hierarchized controls the hard component, each hierarchy of the information system is subjected to a cyber attack that affects the functional safety of the hardware component. In the technique disclosed in PTL 1, the security level regarding the cyber attack is not evaluated.

An object of the present invention is to evaluate functional safety of a cyber security system.

### Solution to Problem

The present invention provides a representative security evaluation server including:
a hierarchy generation unit configured to generate information regarding a plurality of system hierarchies in an evaluation subject system;
an evaluation unit configured to, based on the information regarding the plurality of system hierarchies generated by the hierarchy generation unit, calculate an evaluation value of protection effectiveness based on a security function requirement included in each of the plurality of system hierarchies in the evaluation subject system, and calculate an evaluation value of protection effectiveness based on a combination of the security function requirements; and
a verification unit configured to verify whether each of the security function requirements in the evaluation subject system is in excess or insufficient, based on each of the evaluation values calculated by the evaluation unit and a target value.

### Advantageous Effects of Invention

The present invention provides an evaluation for functional safety of a cyber security system.

### Brief Description of Drawings

[FIG. 1] FIG. 1 is a diagram showing an example of a block configuration of a secure function safety evaluation device.
[FIG. 2] FIG. 2 is a diagram showing an example of a hardware configuration of the secure function safety evaluation device.
[FIG. 3A] FIG. 3A is a diagram showing an example of a "system operating environment specification information table".
[FIG. 3B] FIG. 3B is a diagram showing an example of an "each single system hierarchy information table".
[FIG. 3C] FIG. 3C is a diagram showing an example of a "system structure specification information table".
[FIG. 4] FIG. 4 is a diagram showing an example of an "evaluation calculation data table".
[FIG. 5] FIG. 5 is a diagram showing an example of a sequence for the secure function safety evaluation device.
[FIG. 6] FIG. 6 is a diagram showing an example of a flowchart of an input processing unit.
[FIG. 7] FIG. 7 is a diagram showing an example of a flowchart of hierarchizing process steps.
[FIG. 8] FIG. 8 is a diagram showing an example of a flowchart of an evaluation calculation unit.
[FIG. 9] FIG. 9 is a diagram showing an example of a flowchart of a requirement excess/insufficiency verification unit.
[FIG. 10] FIG. 10 is a diagram showing an example of an input screen where an "execution item and operating environment specification" is inputted.
[FIG. 11] FIG. 11 is a diagram showing an example of an input screen where a "protection effectiveness targeted" is inputted.
[FIG. 12] FIG. 12 is a diagram showing an example of a display screen for a "system operating environment specification information and each hierarchy definition".
[FIG. 13A] FIG. 13A is a diagram showing an example of an input screen where a "system structure hierarchized" is inputted.
[FIG. 13B] FIG. 13B is a diagram showing an example of an input screen where a "security function requirement structure" is inputted.
[FIG. 14] FIG. 14 is a diagram showing an example of a display screen for a "result of quantitative evaluation for system and each security function requirement".
[FIG. 15] FIG. 15 is a diagram showing an example of a display screen for a "recommended result for excess/insufficiency of security function requirements".
[FIG. 16] FIG. 16 is a diagram showing an example of an attack to a system and functional safety in the system.

### Description of Embodiments

An embodiment of the present invention will be described in detail below with reference to the drawings.

### Example 1

### ---System structure---

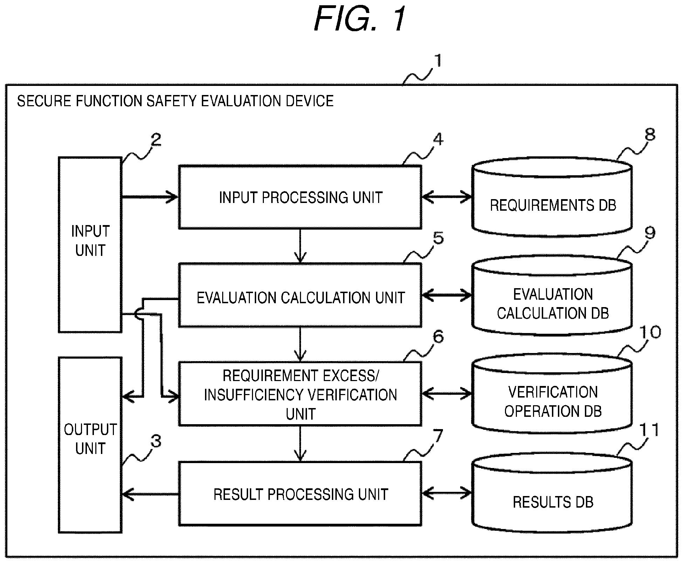

An example of a block configuration of a secure function safety evaluation device 1 in Example 1 will be described with reference to FIG. 1. The secure function safety evaluation device 1 is a system for quantitatively evaluating functional safety of a cyber security system included in an extendable, connected embedded system.

The secure function safety evaluation device 1 includes an input unit 2, an output unit 3, an input processing unit 4, an evaluation calculation unit 5, a requirement excess/insufficiency verification unit 6, a result processing unit 7, a requirements DB 8, an evaluation calculation DB 9, a verification operation DB 10, and a results DB 11.

The input unit 2 receives from a user an input of information regarding specification for an evaluation subject system and protection effectiveness targeted. The output unit 3 outputs to the user a result of an evaluation for the evaluation subject system. The input processing unit 4 extracts, from the specification for the evaluation subject system that has been inputted to the input unit 2, information to be used for quantitative evaluation.

The evaluation calculation unit 5 uses the information extracted from the specification for the evaluation subject system, and quantifies the protection effectiveness in the evaluation subject system. The requirement excess/insufficiency verification unit 6 evaluates whether or not the protection effectiveness quantified satisfies the protection effectiveness targeted, and then verifies a security function requirement that satisfies the protection effectiveness targeted. The result processing unit 7 undertakes a process of outputting a result of the evaluation for the protection effectiveness and a result of verifying whether the security function requirement is in excess or insufficient to satisfy the protection effectiveness.

The requirements DB 8 is a database that stores information regarding a hierarchy structure of the evaluation subject system; information regarding the hierarchy structure in accordance with the operating environment specification for the evaluation subject system (that the user has inputted to the input unit 2); and information regarding the security function requirements used to quantitatively evaluate the cyber security system. The evaluation calculation DB 9 is a database that stores calculation procedures for quantifying the protection effectiveness.

The verification operation DB 10 is a database that stores information regarding security function requirements used for evaluating whether or not the protection effectiveness quantified satisfies the protection effectiveness targeted and that stores information regarding security function requirements for satisfying the protection effectiveness targeted. The results DB 11 is a database that stores the result of the quantitative evaluation of the protection effectiveness in the evaluation subject system and that stores the security function requirements for satisfying the protection effectiveness targeted.

### --- Example of hardware configuration ---

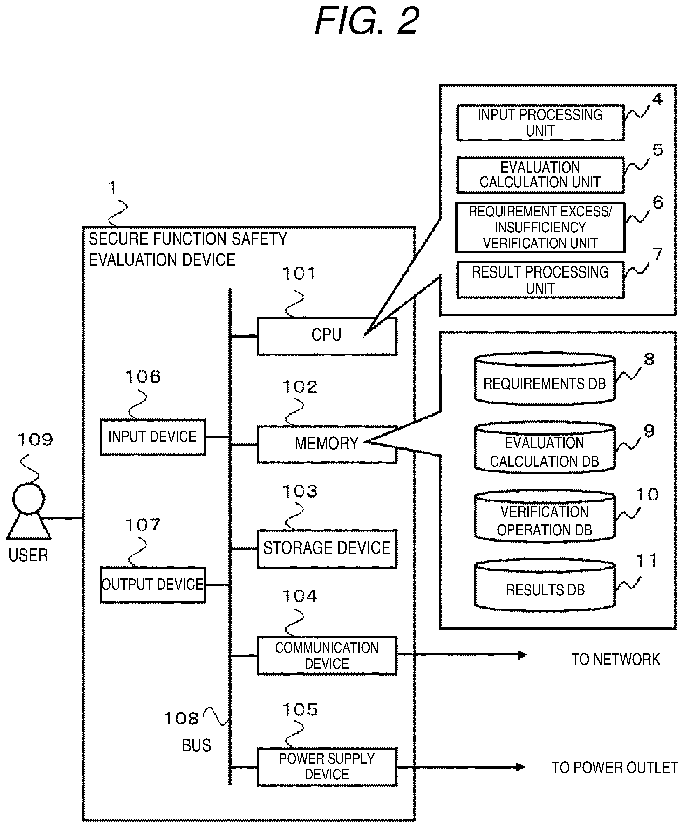

An example of hardware configuration of the secure function safety evaluation device 1 in Example 1 will be described with reference to FIG. 2. The secure function safety evaluation device 1 shown in FIG. 2 includes a CPU 101, a memory 102, a storage device 103, a communication device 104, a power supply device 105, an input device 106, and an output device 107, all of which are connected to each other via a bus 108.

The CPU 101 is a central processing unit (operational unit) configured to execute a program stored in the storage device 103 or the memory 102, so as to operate the input processing unit 4, the evaluation calculation unit 5, the requirement excess/insufficiency verification unit 6, and the result processing unit 7 in the secure function safety evaluation device 1.

The memory 102 is a volatile storage element and corresponds to a main storage device, into which the program and data are loaded, when the CPU 101 operates. The storage device 103 is a nonvolatile storage element and corresponds to an auxiliary storage device that stores the data inputted to and outputted from the CPU 101 and the programs for the CPU 101. The storage device 103 stores the requirements DB 8, the evaluation calculation DB 9, the verification operation DB 10, and the results DB 11.

The communication device 104 communicates with an external network node via a network communication. The power supply device 105 is connected to a power outlet to supply power to each device in the secure function safety evaluation device 1.

The input device 106 corresponds to an interface for the user to input information, and is, for example, a keyboard, a mouse, a touch panel, a card reader, or a voice input device. The output device 107 corresponds to an interface for providing a feedback, a calculation result, or the like to the user, and is, for example, a screen display device, a voice output device, or a printer.

Note that, having the configuration above, the secure function safety evaluation device 1 in FIG. 2 may be called a security evaluation server. The secure function safety evaluation device 1 is a single hardware device but may operate on two or more hardware platforms when distributing a load for a large-scale service or when employing a redundant configuration for availability enhancement.

Further, the information such as the program or a table to operate the input processing unit 4, the evaluation calculation unit 5, the requirement excess/insufficiency verification unit 6, and the result processing unit 7 may be stored in, instead of the storage device 103, a storage device (not shown) or a computer-readable, non-transitory data storage medium (not shown). The storage device is, for example, a storage subsystem, a nonvolatile semiconductor memory, a hard disk drive (HDD), or a solid state drive (SSD). The computer-readable, non-transitory data storage medium is, for example, an IC card, an SD card, or a DVD.

### --- Example of data ---

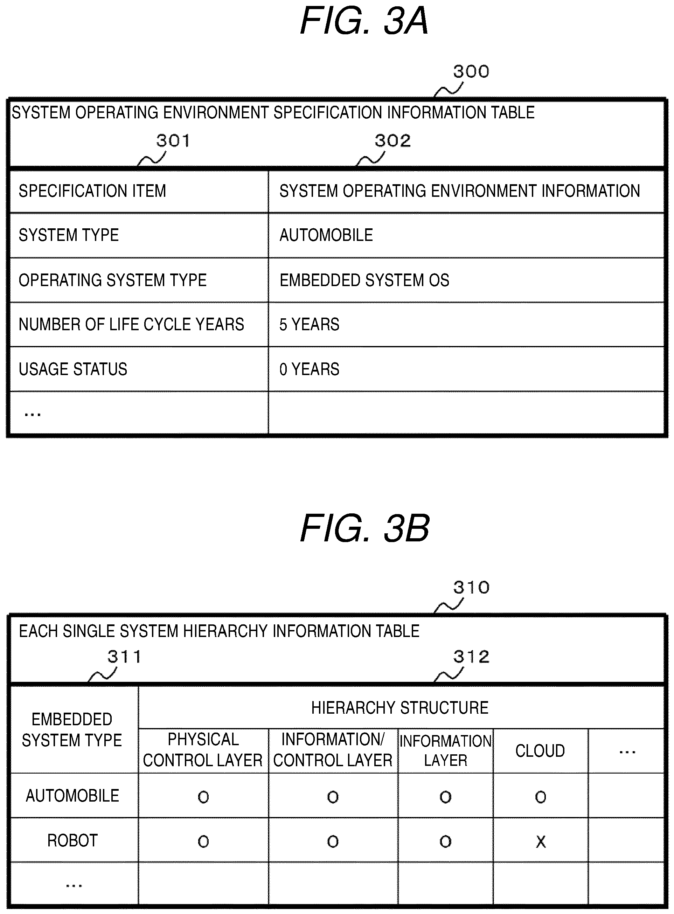

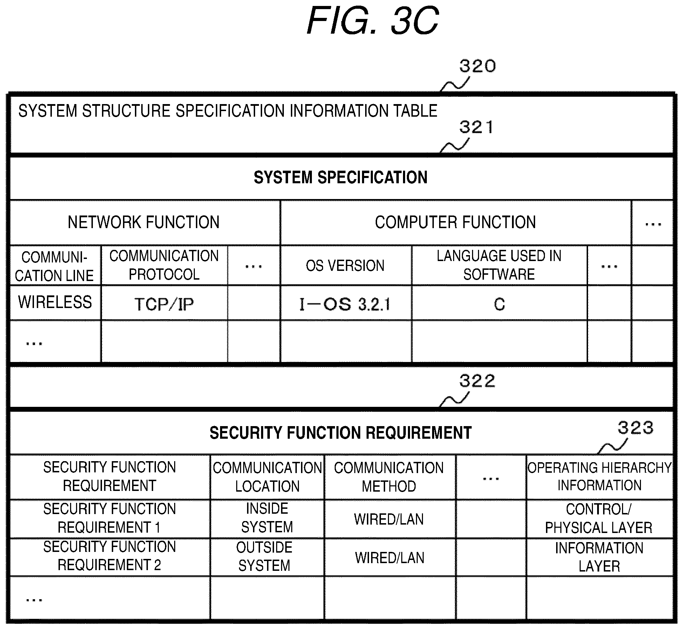

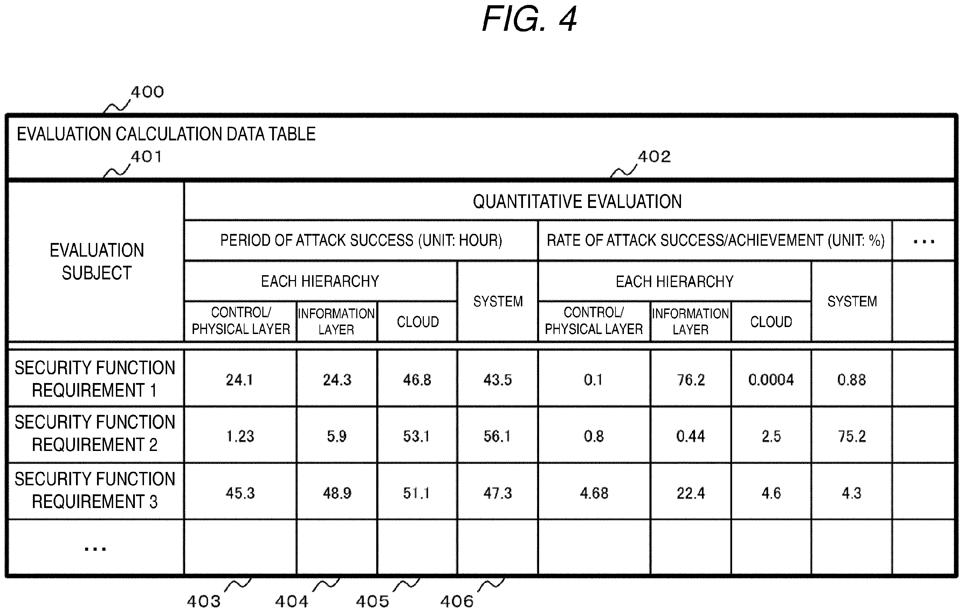

An example of the data used in the secure function safety evaluation device 1 in Example 1 will be described with reference to each of FIG. 3A, FIG. 3B, FIG. 3C and FIG. 4. Each of FIGS. 3A to 3C shows an example of the data stored in the requirements DB 8. The requirements DB 8 includes a system operating environment specification information table 300, an each single system hierarchy information table 310, and a system structure specification information table 320.

The system operating environment specification information table 300 corresponds to the data regarding the operating environment specification for the evaluation subject system that a user 109 has specified in the input unit 2. The system operating environment specification information table 300 has a specification item 301 and a system operating environment information 302 as a pair, and includes a plurality of the pairs.

As an example, the specification item 301 includes a system type, an operating system type, the number of life cycle years, and a usage status. The system operating environment information 302 paired with the specification item 301 includes information regarding the system operating environment in correspondence to each item in the specification item 301. The specification item 301 preferably includes an item specified to be processed in the input processing unit 4.

The each single system hierarchy information table 310 corresponds to data that, based on the operating environment specification for the evaluation subject system (that the user 109 has specified in the input unit 2), specifies a hierarchy structure in the evaluation subject system in correspondence to the operating environment specification above. The each single system hierarchy information table 310 shows a hierarchy structure predetermined for each single system.

The each single system hierarchy information table 310 has an embedded system type 311 and a hierarchy structure 312 as a pair, and includes a plurality of the pairs. The hierarchy structure 312 is a table showing information for each of a plurality of hierarchies. The embedded system type 311 includes a category for the embedded system as the evaluation subject system, such as an "automobile" and a "robot".

The hierarchy structure 312 includes information regarding which hierarchy is included in each of the embedded system type 311, and the information shows each hierarchy with "○" or "×". As an example, FIG. 3B shows that the "automobile" in the embedded system type 311 includes a physical control layer, an information/control layer, an information layer, and a cloud, each shown with "○". With regard to the "robot", the cloud is shown with "x". Thus, the "robot" includes the physical control layer, an information control device, and the information layer.

The system structure specification information table 320 corresponds to the data for detailed system structure specification (that the user 109 has inputted to the input unit 2). The system structure specification information table 320 includes two independent tables of a system specification 321 and a security function requirement 322, each table having a plurality of items.

As shown in FIG. 3C, the system specification 321 includes items of system structure information such as network function specification and computer function specification. Each of these items corresponds to the item specified to be processed in the input processing unit 4.

The security function requirement 322 includes each of the security function requirements included in the evaluation subject system, along with detailed information regarding each of the security function requirements, such as a communication location and a communication method. Further, the security function requirement 322 may include an operating hierarchy information 323 to indicate in which hierarchy of the evaluation subject system each of the security function requirements is included.

The three tables, i.e., the system operating environment specification information table 300, the each single system hierarchy information table 310, and the system structure specification information table 320, are correlated based on the input from the user 109.

In the secure function safety evaluation device 1, the input processing unit 4 determines a type of the evaluation subject system based on the system operating environment specification information table 300. Then, based on the type of the evaluation subject system determined and contents in the each single system hierarchy information table 310, the input processing unit 4 displays to the user 109 the information regarding the hierarchy structure in the evaluation subject system.

When the user 109 inputs the information regarding the hierarchy structure in the evaluation subject system, the security function requirement 322 (including the operating hierarchy information 323 of the system structure specification information table 320) is to be set.

FIG. 4 is a diagram showing an example of the data stored in the evaluation calculation DB 9. The evaluation calculation DB 9 includes an evaluation calculation data table 400 in addition to the calculation procedures for quantifying the protection effectiveness. As shown in FIG. 4, the evaluation calculation data table 400 includes an evaluation subject 401 and a quantitative evaluation 402. The evaluation subject 401 stores the information regarding the security function requirements. The quantitative evaluation 402 stores a result of evaluation for each of the security function requirements in each hierarchy.

In the evaluation subject 401, the information regarding the security function requirements is acquired from the information shown in a column of the security function requirements in the system structure specification information table 320. Note that, "security function requirement 1" or the like in the evaluation subject 401 is an illustrative description, and each of the security function requirements may employ another description.

The quantitative evaluation 402 includes a column 403, a column 404, a column 405, and a column 406. Each of the columns 403 to 405 stores the result of evaluation for each of the security function requirements in the corresponding hierarchy. The column 406 stores the information regarding the result of evaluation for the evaluation subject system.

As an example according to Example 1, the information shown in the quantitative evaluation 402 in FIG. 4 is divided and stored in each of the columns 403 to 405. The column 403 stores a period of attack success in a control/information layer. The column 404 stores the period of attack success in the information layer. The column 405 stores the period of attack success in the cloud layer.

Each of the columns 403, 404, and 405 is set based on the information acquired from the hierarchy structure 312 of the each single system hierarchy information table 310 and in a row of the embedded system type 311 (of the each single system hierarchy information table 310), the row corresponding to the type of the evaluation subject system. Accordingly, the number of the hierarchies and the number of types of hierarchies are not limited to the example shown in FIG. 4.

Note that, the quantitative evaluation 402 does not necessarily store only one index, such as the period of attack success, and may store a plurality of indexes for the quantitative evaluation. Additionally, the index is not limited to the period of attack success and a rate of attack success/achievement, and other indexes may be included.

For example, the index may be an attack possibility based on previous records.

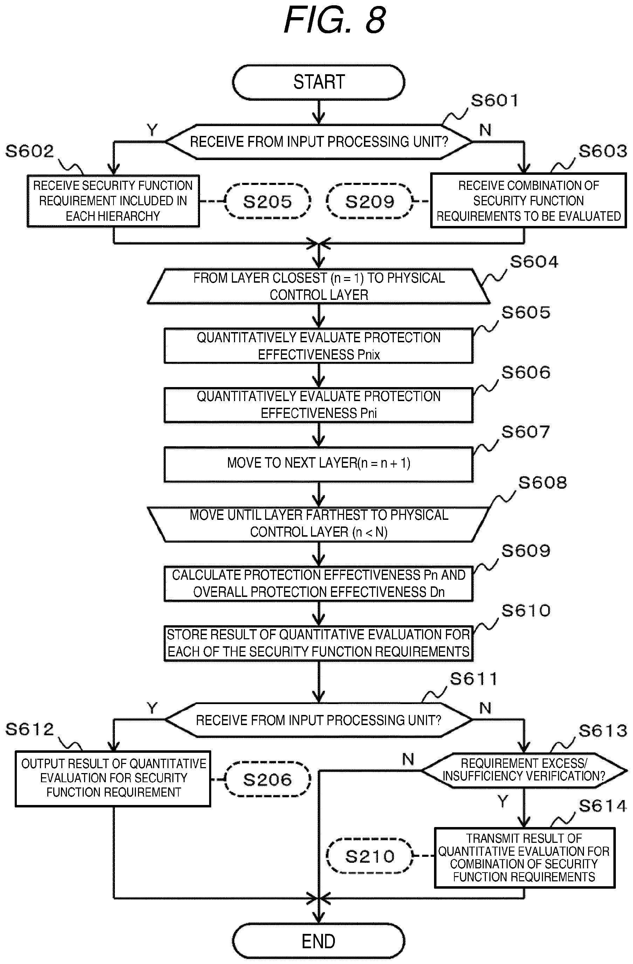

The evaluation calculation data table 400 has a block defined by each of the security function requirements in the evaluation subject 401 and each of the columns (each of hierarchies) of the quantitative evaluation 402. Each block stores information calculated in process steps of a flowchart of the evaluation calculation unit 5 in FIG. 8.

### --- Flow of process ---

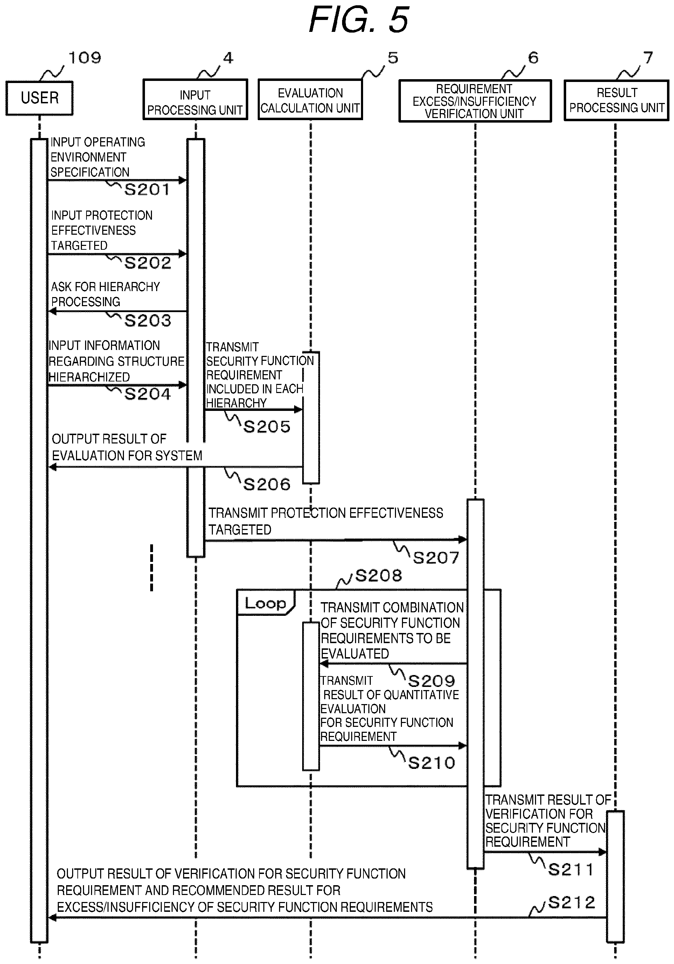

An example of a sequence for the secure function safety evaluation device 1 in Example 1 will be described with reference to FIG. 5. FIG. 5 shows the input processing unit 4, the evaluation calculation unit 5, the requirement excess/insufficiency verification unit 6, and the result processing unit 7, each having been described with reference to FIG. 1 and others.

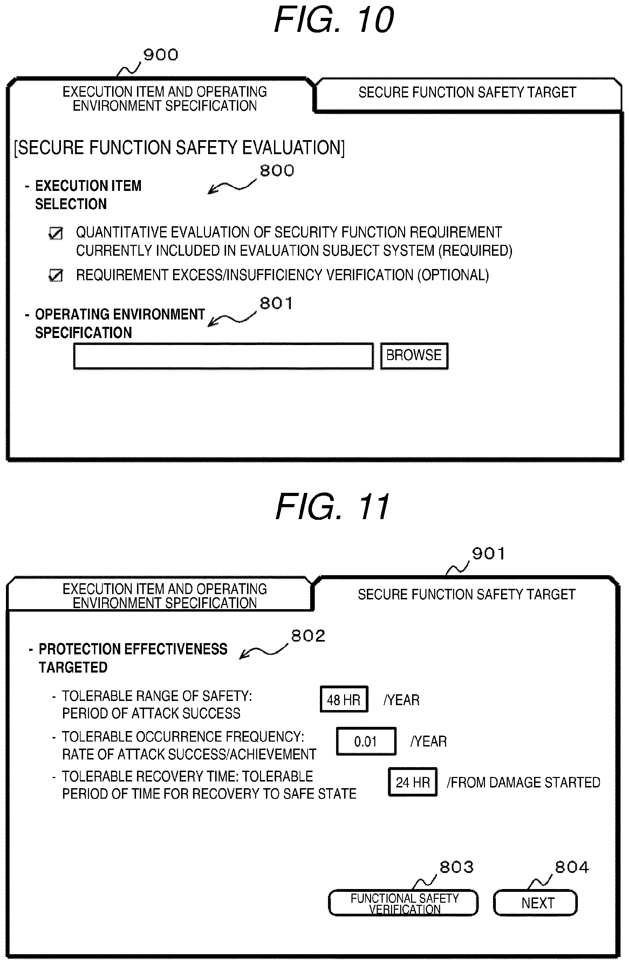

In step S201, the input processing unit 4 receives, from the user 109 through the input device 106, the operating environment specification that includes the information of the system operating environment specification information table 300. An example of an input screen that the secure function safety evaluation device 1 displays to the user 109 will be described later with reference to FIG. 10.

In step S202, the input processing unit 4 receives, from the user 109 through the input device 106, the protection effectiveness targeted that the evaluation subject system is required to satisfy. An example of an input screen that the secure function safety evaluation device 1 displays to the user 109 will be described later with reference to FIG. 11.

In step S203, based on the operating environment specification received in the step S201, the input processing unit 4 refers to the hierarchy structure 312 of the each single system hierarchy information table 310 stored in the requirements DB 8. The input processing unit 4 presents to the user 109 "each hierarchy definition" in accordance with the operating environment specification received, and asks the user 109 for hierarchy processing in the evaluation subject system.

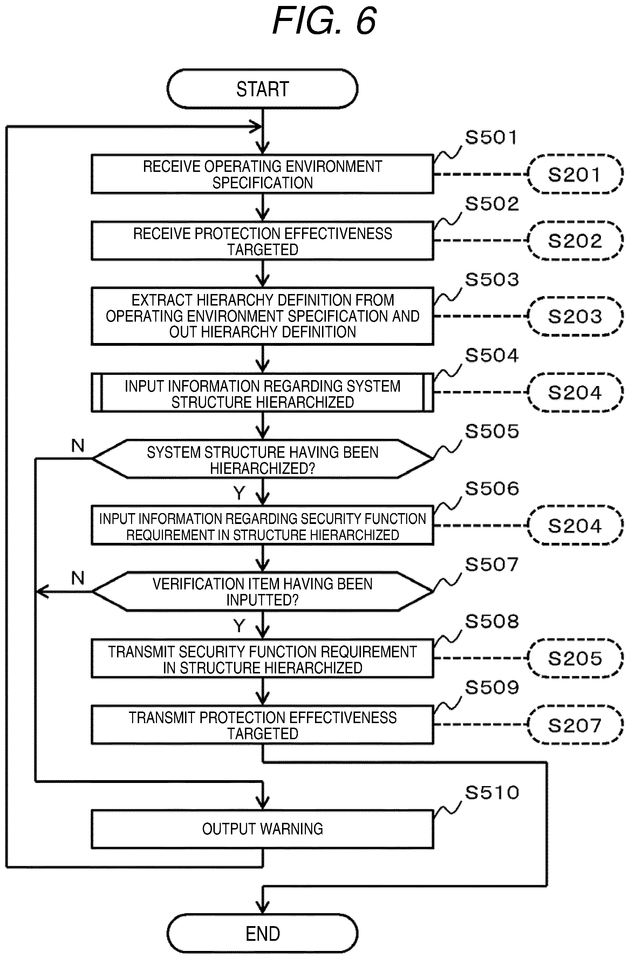

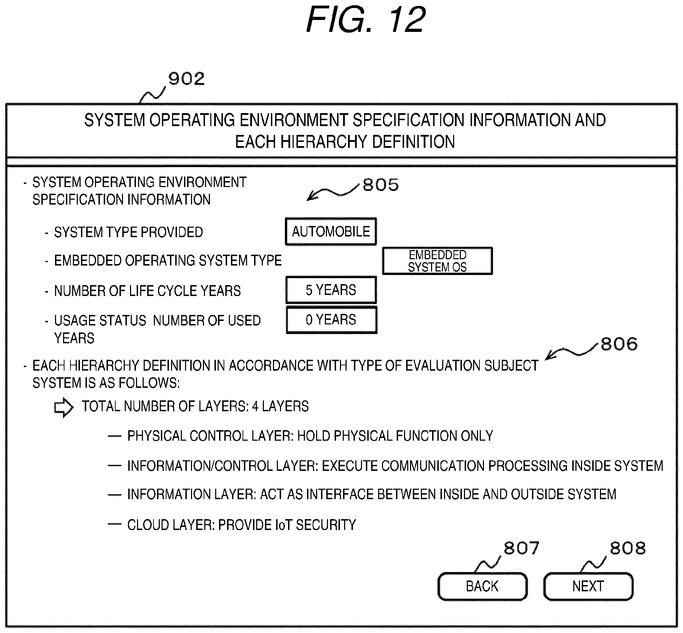

The input processing unit 4 acquires, from the each single system hierarchy information table 310, the "each hierarchy definition" in accordance with the data for the operating environment specification. Process steps by the input processing unit 4 to acquire the "each hierarchy definition" will be described later in step S503 in FIG. 6. An example of an output screen that the secure function safety evaluation device 1 displays to the user 109 will be described later with reference to FIG. 12.

In step S204, the input processing unit 4 receives from the user 109 the information regarding the structure hierarchized, and includes the information into the system structure specification information table 320.

Here, the user 109 hierarchizes the structure of the evaluation subject system based on the information from the each single system hierarchy information table 310 displayed in the step S203, and inputs the information regarding the structure hierarchized into the input processing unit 4.

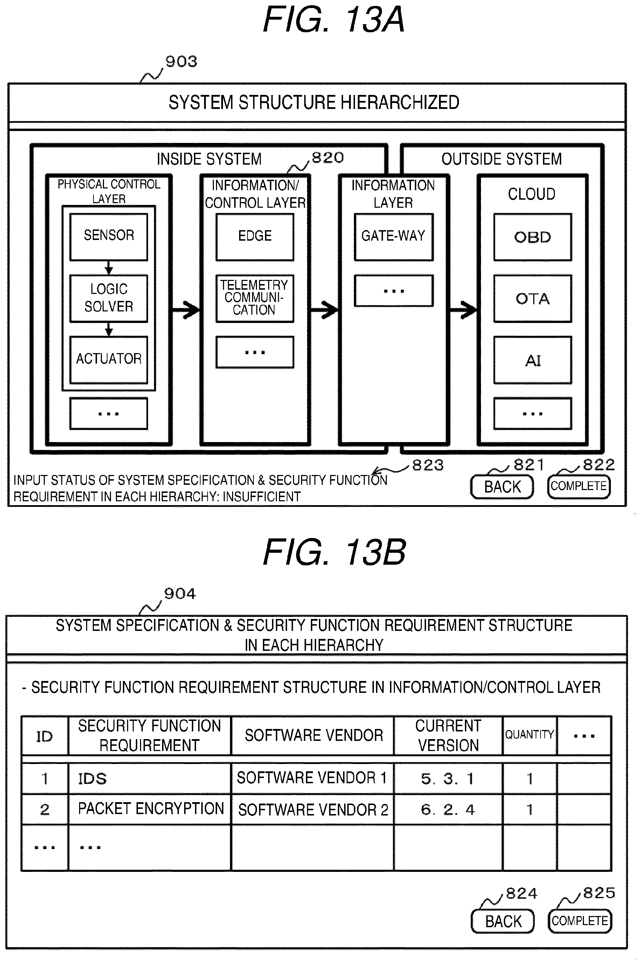

The input processing unit 4 displays to the user 109 the "each hierarchy definition" in order to acquire from the user 109 the information regarding the structure hierarchized in accordance with the "each hierarchy definition". This process step will be described later in step S504 in FIG. 6. An example of an input screen that the secure function safety evaluation device 1 displays to the user 109 will be described later with reference to FIG. 13A and FIG. 13B.

In step S205, the input processing unit 4 uses the requirements DB 8 to extract a requirement for the quantitative evaluation, in other words, the security function requirement included in each hierarchy, from the information regarding the structure hierarchized and inputted by the user 109. Subsequently, the input processing unit 4 transmits, to the evaluation calculation unit 5, the security function requirement included in each hierarchy that the input processing unit 4 has extracted.

In step S206, the evaluation calculation unit 5 receives the security function requirement included in each hierarchy from the input processing unit 4, and follows the calculation procedures stored in the evaluation calculation DB 9 to quantify the protection effectiveness based on the security function requirement included in each hierarchy. The evaluation calculation unit 5 displays the result of the quantitative evaluation for the evaluation subject system to the user 109. The result of the evaluation for the evaluation subject system is stored in the evaluation calculation data table 400 of the evaluation calculation DB 9. An example of the calculation for the quantitative evaluation will be described later in steps S604, S605, S606, S607, S608, S609, and S610 in FIG. 8.

In step S207, the input processing unit 4 transmits the protection effectiveness targeted, which the user 109 has inputted in the step S202, to the requirement excess/insufficiency verification unit 6. Step S208 is a loop configured to verify whether or not the security function requirement included in each hierarchy satisfies the protection effectiveness targeted, or configured to verify a combination of the security function requirement included in each hierarchy that satisfies the protection effectiveness targeted.

With regard to the security function requirement included in each hierarchy, a plurality of security function requirements may be included in a single hierarchy. Alternatively, each of the plurality of hierarchies may include the security function requirement(s). Accordingly, by verifying the combination of the security function requirements, it is possible to extract a minimum combination of the security function requirements that satisfies the protection effectiveness targeted.

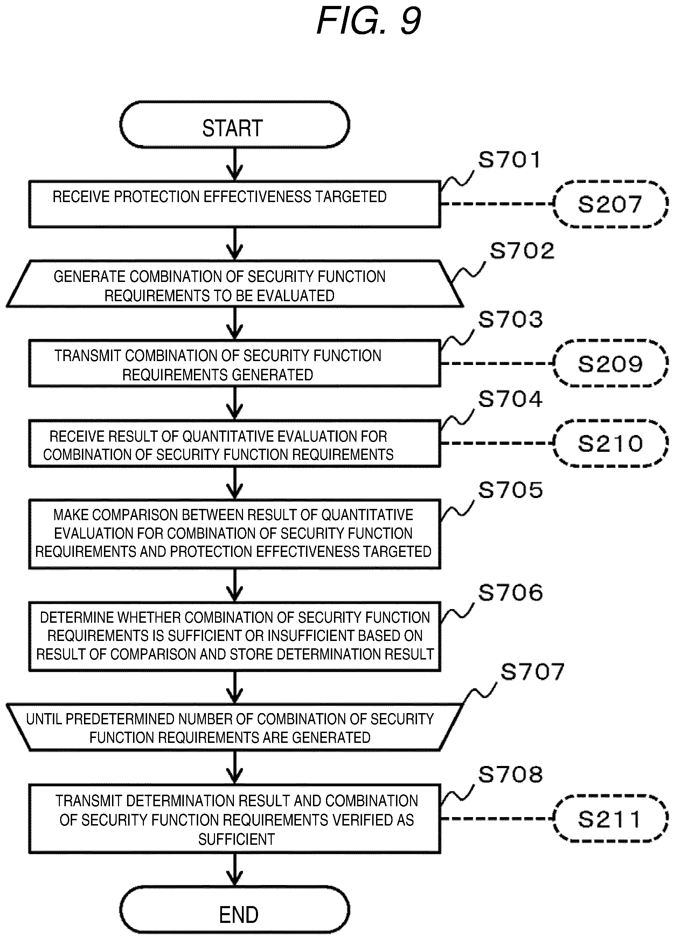

The loop as the step S208 includes step S209 and step S210. The loop is repeated until a verifiable combination of the security function requirements is verified or a condition predetermined is fulfilled. An example of process steps by the requirement excess/insufficiency verification unit 6, based on which the loop as the step S208 is operated, will be described later in step S702 and step S707 in FIG. 9.

In the step S209, the requirement excess/insufficiency verification unit 6 transmits one of the verifiable combinations of the security function requirements to the evaluation calculation unit 5. Then, in the step S209 in a next cycle of the loop (step S208), the requirement excess/insufficiency verification unit 6 transmits another one of the verifiable combinations of the security function requirements to the evaluation calculation unit 5. An example of a process step for transmitting the combination will be described later in step S703 of FIG. 9.

In the step S210, the evaluation calculation unit 5 quantitatively evaluates the protection effectiveness based on the combination of the security function requirements received from the requirement excess/insufficiency verification unit 6, and transmits the result of the evaluation to the requirement excess/insufficiency verification unit 6. The requirement excess/insufficiency verification unit 6 uses the result of the evaluation received from the evaluation calculation unit 5 to proceed with the verification above.

In step S211, the requirement excess/insufficiency verification unit 6 compares the protection effectiveness targeted (received from the input processing unit 4) with the result of the evaluation (received from the evaluation calculation unit 5), so as to determine/verify whether each of the combinations of the security function requirement is in excess or insufficient to satisfy the protection effectiveness targeted. The requirement excess/insufficiency verification unit 6 transmits the result of the verification regarding the security function requirement to the result processing unit 7. An example of process steps for verifying the result will be described later in steps S705 to S706 in FIG. 9.

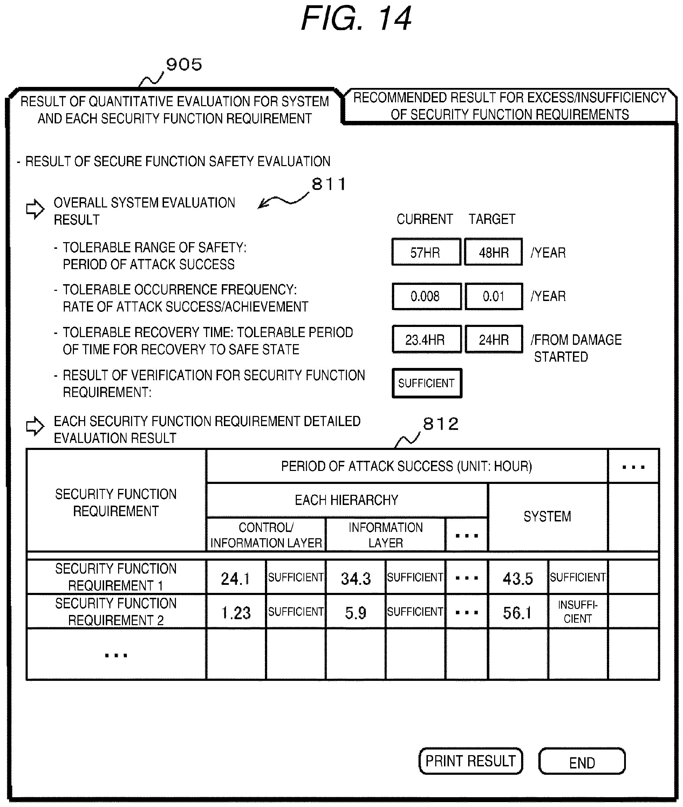

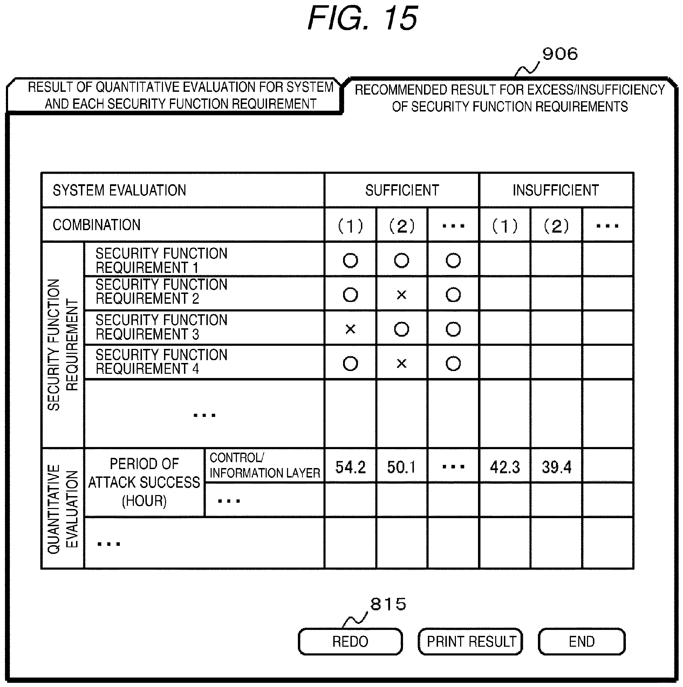

In step S212, based on the result of the verification regarding the security function requirements (received from the requirement excess/insufficiency verification unit 6), the result processing unit 7 displays to the user 109 the result of the verification regarding the security function requirement as well as a recommended result for excess/insufficiency of each of the combinations of the security function requirements. An example of the output screen will be described later with reference to FIG. 14 and FIG. 15.

An example of a flowchart of process steps by the input processing unit 4 in the secure function safety evaluation device 1 will be described with reference to FIG. 6. In step S501, the input processing unit 4 receives the operating environment specification based on the information inputted by the user 109. The step S501 corresponds to the step S201 in FIG. 5.

FIG. 10 is a diagram showing an example of an input screen 900 displayed to the user 109, and shows an "execution item and operating environment specification". The input screen 900 is a graphical user interface (GUI) displayed in the step S501. As shown in FIG. 10, the input screen 900 includes an execution item selection field 800 and an operating environment specification field 801. The user 109 is required to upload a file of the operating environment specification in the operating environment specification field 801.

The execution item selection field 800 is a box where the user 109 selects an execution item for the secure function safety evaluation device 1 by ticking the box. Note that, the execution item "quantitative evaluation of security function requirement currently included in evaluation subject system" is required, and thus its box may remain ticked at all times regardless of the selection by the user 109.

When a box of "requirement excess/insufficiency verification" in the execution item selection field 800 is ticked, each of the steps S208, S211, and S212 in FIG. 5 is to be executed. When the box of "requirement excess/insufficiency verification" is not ticked, none of the steps S208, S211, and S212 needs to be executed.

On the other hand, the execution item "quantitative evaluation of security function requirement currently included in evaluation subject system" is required. Thus, when the box of "requirement excess/insufficiency verification" is ticked, each of "quantitative evaluation of security function requirement currently included in evaluation subject system" and "requirement excess/insufficiency verification" is to be executed.

When the user 109 sets a file name for the operating environment specification in space of the operating environment specification field 801 and clicks a "Browse" button, the input processing unit 4 uploads the file (data) of the operating environment specification, the file (data) corresponding to the file name set in the space, to the input processing unit 4.

Here, the file (data) of the operating environment specification preferably includes the information of the system operating environment specification information table 300, so that the input processing unit 4 acquires the type of the evaluation subject system from the information.

Note that, the input screen 900 in FIG. 10 is an example, and as long as the secure function safety evaluation device 1 acquires the information regarding the system operating environment, contents displayed on the input screen and a type of information to be inputted are not limited. For example, instead of acquiring the file of the operating environment specification, the input screen 900 may display to the user 109 each of information items to be acquired and require the user 109 to manually input each of the information items.

In step S502, the input processing unit 4 receives the protection effectiveness targeted that the user 109 has inputted. The step S502 corresponds to the step S202 in FIG. 5. The step S501 is executed when the box of "requirement excess/insufficiency verification" is ticked in the execution item selection field 800. The step S501 may be skipped when the box of "requirement excess/insufficiency verification" is not ticked.

FIG. 11 is a diagram showing an example of an input screen 901 displayed to the user 109, and shows the protection effectiveness targeted. The input screen 901 corresponds to the GUI displayed in the step S502. As shown in FIG. 11, the input screen 901 includes a protection effectiveness targeted field 802, a button 803, and a button 804.

The protection effectiveness targeted corresponds to the index for quantitative evaluation of the security function requirements, such as a tolerable range of safety, a tolerable occurrence frequency, and tolerable recovery time. More specifically, in the protection effectiveness targeted field 802, an example of the tolerable range of safety corresponds to a period of cyber attack success; an example of the tolerable occurrence frequency corresponds to a rate of cyber attack success/achievement; and an example of the tolerable recovery time corresponds to a tolerable period of time for recovery to a safe state.

The button 803 is a button for executing verification of the functional safety. When the button 803 is clicked, the secure function safety evaluation device 1 verifies whether or not the functional safety requirement in the evaluation subject system satisfies the functional safety required. When the button 804 is clicked, the secure function safety evaluation device 1 proceeds to evaluate the security function requirement and proceeds to the step S503.

Note that, as long as the information regarding the protection effectiveness targeted is acquired here, contents displayed on the input screen and a type of information to be inputted are not limited. Further, a type of button is not limited, and an operation in response to each button clicked is not limited.

In the step S502, the user 109 inputs the information regarding the protection effectiveness targeted. Here, the protection effectiveness targeted is not limited to the items shown in the protection effectiveness targeted field 802 in FIG. 11. For example, the protection effectiveness targeted may include an item described in a document "Safety Concept Description Language (Version 1.3)" issued by Safety Concept Notation Study Group (http://www.scn-sg.com/main/).

In the document above, in order to derive the functional safety required, the user 109 inputs an automotive safety integrity level (ASIL) in parallel into intended functions. The intended functions include each of an initial-stage hazard analysis, a safety goal targeted, a safety status targeted and time restriction targeted of an object to be analyzed.

In the step S502, the user 109 inputs the protection effectiveness targeted. The protection effectiveness here is not limited to the items in the document above, and may include quantitative evaluation items such as an occurrence frequency of functional safety failures.

In the secure function safety evaluation device 1, the protection effectiveness targeted that the user 109 inputs in the step S502 may include items that satisfy both functional safety requirements and security function requirements, the items made based on the items in the document above or others items than the items in the document above.

As an example, the item as "tolerable range of safety" in the protection effectiveness targeted field 802 is a single item, but the single item not only satisfies a tolerable range of occurrence of the functional safety failures as in the document above, but also satisfies the tolerable period of cyber attack success for security reasons.

In the step S503, based on the each single system hierarchy information table 310 in the requirements DB 8, the input processing unit 4 extracts the hierarchy definition from the operating environment specification received. The input processing unit 4 displays the hierarchy definition extracted to the user 109 to ask the user 109 for the hierarchy processing in the evaluation subject system. The step S503 corresponds to the step S203 in FIG. 5.

FIG. 12 is an example of a display screen 902 when the hierarchy definition is displayed to the user 109 in the step S503. The display screen 902 shows "system operating environment specification information and each hierarchy definition". As shown in FIG. 12, the display screen 902 includes a system operating environment specification information field 805, an each hierarchy definition field 806, a button 807, and a button 808. The system operating environment specification information field 805 is configured to display the information of the system operating environment specification information table 300, and the each hierarchy definition field 806 is configured to display each hierarchy definition.

When the button 807 is clicked, the secure function safety evaluation device 1 returns to the step S501. When the button 808 is clicked, the secure function safety evaluation device 1 proceeds to the step S504 for the hierarchy processing. Note that, the display screen is not limited to the system operating environment specification information field 805 and the each hierarchy definition field 806, and may display the each hierarchy definition field 806 only.

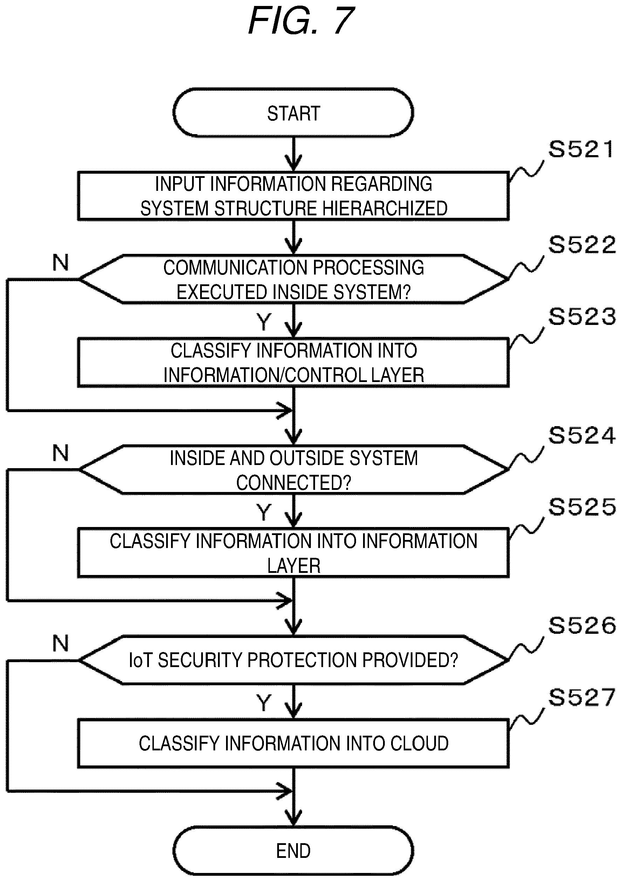

In the step S504, the user 109 inputs the information for hierarchizing the system structure. The input processing unit 4 includes the information inputted by the user 109 into the system structure specification information table 320. The step S504 corresponds to the step S204 in FIG. 5. The step S504 will be further described later with reference to FIG. 7 or FIG. 13A.

In step S505, the input processing unit 4 determines whether or not the system structure has been hierarchized.

Conditions for the determination will be further described later with reference to FIG. 13A. On determination that the system structure has been hierarchized, the input processing unit 4 proceeds to step S506. On determination that the system structure has not been hierarchized, the input processing unit 4 proceeds to step S510.

In the step S506, the user 109 inputs information regarding the security function requirement in the structure hierarchized. The input processing unit 4 stores the information regarding the security function requirement in the structure hierarchized (that the user 109 has inputted) in the system structure specification information table 320 of the requirements DB 8. The step S506 also corresponds to the step S204 in FIG. 5, and will be further described later with reference to FIG. 13B.

In step S507, the input processing unit 4 determines whether or not a verification item has been inputted. Conditions for the determination will be further described later with reference to FIG. 13B. On determination that the verification item has been inputted, the input processing unit 4 proceeds to step S508. On determination that the verification item has not been inputted, the input processing unit 4 proceeds to the step S510.

In the step S508, the input processing unit 4 transmits the information regarding the security function requirement in the structure hierarchized to the evaluation calculation unit 5. The step S508 corresponds to the step S205 in FIG. 5. In step S509, the input processing unit 4 transmits the protection effectiveness targeted (that has been inputted in the step S502) to the requirement excess/insufficiency verification unit 6.

The step S509 corresponds to the step S207 in FIG. 5. In the step S510, the input processing unit 4 displays to the user 109 a warning of insufficient information, and returns to the step S501. Note that, as a unit configured to generate the information regarding the hierarchy (as has been described above), the input processing unit 4 may be referred to as a hierarchy generation unit.

FIG. 13A is a diagram showing an example of an input screen 903 for displaying the system structure hierarchized to the user 109. The user 109 inputs information for each hierarchy on the input screen 903. The input screen 903 is a display of the structure of the evaluation subject system hierarchized. The example of FIG. 13A displays the evaluation subject system divided into "inside system" and "outside system", and displays each hierarchy included "inside system" and "outside system".

Here, "inside system" may correspond to the embedded system, and "outside system" may correspond to the world connected to the embedded system. Note that, "inside system" and "outside system" are not limited thereto.

Here, "inside system", "outside system", "physical control layer", "information/control layer", "information layer", "cloud", and the information for displaying the structure in each hierarchy may include the information acquired from the each single system hierarchy information table 310 and the system structure specification information table 320, or may include the information inputted by the user 109 on the input screen 903.

Process steps where the user 109 inputs the information on the input screen 903 will be further described with reference to FIG. 7. Note that, this process step not only acquires the information from the system structure specification information table 320, but may also include the information inputted on the input screen 903 into the system structure specification information table 320.

When a display of each hierarchy is clicked on the input screen 903, the display shifts to an input screen where the user 109 is to input the information regarding the security function requirement included in the hierarchy clicked. For example, when a display 820 is clicked, the display shifts to an input screen 904 in FIG. 13B where the user 109 is to input the information regarding the security function requirement included in the information/control layer.

When the display of each hierarchy is not clicked on the input screen 903, a message 823 may be displayed. Further, on the input screen 903, when a button 821 is clicked, the input processing unit 4 determines in the step S505 of FIG. 6 that the system structure has not been hierarchized. When a button 822 is clicked, the input processing unit 4 determines in the step S505 that the system structure has been hierarchized.

FIG. 13B is a diagram showing an example of the input screen 904 where the user 109 inputs the information regarding the security function requirement in the hierarchy clicked on the input screen 903. For example, when the display 820 as the "information/control layer" is clicked on the input screen 903, the input screen 904 is displayed. On the input screen 904, the user 109 inputs each of the security function requirement in the information/control layer and the information regarding the specification for the system in the information/control layer. The security function requirement includes, for example, "IDS" and "Packet encryption".

Here, information regarding each of the security function requirements, such as "software vendor", "current version", and "quantity", are inputted. However, display items and input items on the input screen 904 are not limited thereto. The information inputted on the input screen 904 is to be included into the system structure specification information table 320.

On the input screen 904, when a button 824 is clicked, the input processing unit 4 determines in the step S507 of FIG. 6 that the verification item has not been inputted. When a button 825 is clicked, the input processing unit 4 determines in the step S507 that the verification item has been inputted. The step S504 and the step S505 may be combined into a single process step, and a button for returning to the input screen 903 may be provided on the input screen 904.

An example of a flowchart of processing details for the step S504 in FIG. 6 will be described with reference to FIG. 7. In step S521, the input processing unit 4 receives the information regarding the structure hierarchized that the user 109 has inputted. The information inputted here may be the information described with reference to FIG. 13A, or may be information to be determined as will be described below.

In step S522, the input processing unit 4 determines, based on the each hierarchy definition in FIG. 12, whether or not the information inputted in the step S521 corresponds to the definition of a hierarchy/layer that is closest to the physical control layer. For example, the input processing unit 4 may determine whether or not communication processing is executed inside the system.

On determination that the communication processing is executed inside the system, the input processing unit 4 proceeds to step S523. On determination that the communication processing is not executed inside the system, the input processing unit 4 proceeds to step S524. In the step S523, the input processing unit 4 classifies the information inputted in the step S521 into the hierarchy/layer closest to the physical control layer.

In the step S524, the input processing unit 4 determines, based on the each hierarchy definition in FIG. 12, whether or not the information inputted in the step S521 corresponds to the definition of a hierarchy/layer that is second closest to the physical control layer. For example, the input processing unit 4 may determine whether or not the hierarchy/layer second closest to the physical control layer is an interface between inside and outside the system.

On determination that the hierarchy/layer second closest to the physical control layer is the interface between inside and outside the system, the input processing unit 4 proceeds to step S525. On determination that the hierarchy/layer second closest to the physical control layer is not the interface between inside and outside the system, the input processing unit 4 proceeds to step S526. In the step S525, the input processing unit 4 classifies the information inputted in the step S521 into the hierarchy/layer second closest to the physical control layer.

In the step S526, the input processing unit 4 determines, based on the each hierarchy definition in FIG. 12, whether or not the information inputted in the step S521 corresponds to the definition of a hierarchy/layer that is farthest to the physical control layer. For example, the input processing unit 4 may determine whether or not security protection for Internet of Things (IoT) is provided.

On determination that the security protection for the IoT is provided, the input processing unit 4 proceeds to step S527. On determination that the security protection for the IoT is not provided, the input processing unit 4 ends these process steps. In the step S527, the input processing unit 4 classifies the information inputted in the step S521 into the hierarchy/layer farthest to the physical control layer.

Note that, the steps S521 to S527 may be repeated a plurality of times in order to divide the structure of the evaluation subject system into the plurality of hierarchies. Further, instead of making the determinations in the steps S522, S524, and S526, the input processing unit 4 may receive the input by the user 109 commanding which hierarchy through the GUI of the input screen 903 in FIG. 13A.

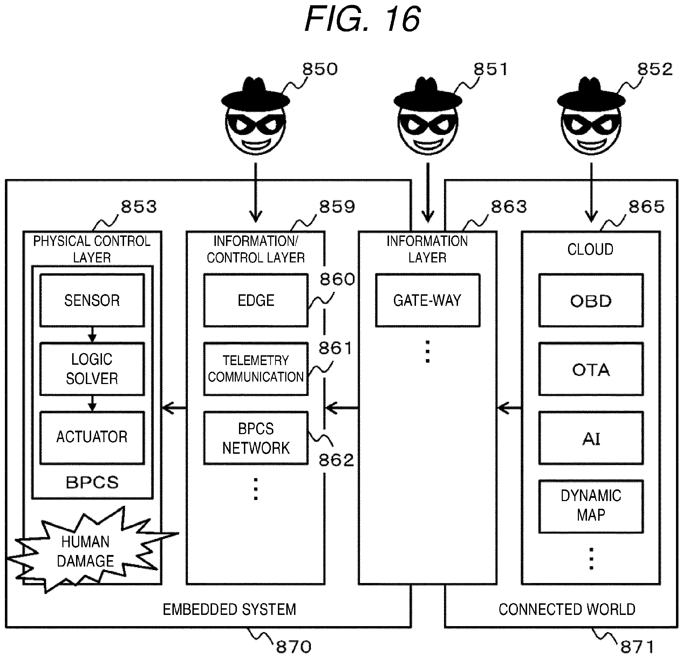

As shown in FIG. 16, an embedded system 870 is extendable and is increasingly connected to a connected world 871 via a connection such as the Internet. In Example 1, the evaluation subject system quantifies the functional safety of the cyber security system. The evaluation subject system is a system including one or more hierarchies in both the embedded system 870 and the connected world 871.

As shown in FIG. 16, the cyber attack to the evaluation subject system is, for example, a cyber attack 850 to the information/control layer 859, a cyber attack 851 to the information layer 863, or a cyber attack 852 to the cloud 865. The cyber attack propagates from the cloud 865 toward the physical control layer 853, thereby increasingly threatening the physical control layer 853.

Under the circumstances that an abnormal operation of the physical control layer 853 may cause human damage, the cyber attack increases a risk of the human damage. Further, the cyber attack increasingly poses a threat to the functional safety.

In Example 1, the secure function safety evaluation device 1 presents to the user how much functional safety of the cyber security system is protected. In this regard, an example of the flowchart of FIG. 8 will be described with reference to FIG. 16. FIG. 8 shows process steps where the evaluation calculation unit 5 in the secure function safety evaluation device 1 quantitatively evaluates the protection effectiveness.

As an assumption for the description below, the evaluation subject system includes N layers excluding the physical control layer. The Nth layer is the farthest layer to the physical control layer. In other words, when a variable n approaches a constant N, the Nth layer is farther to the physical control layer. Additionally, the description below defines each parameter as follows:
N: the number of hierarchies in the evaluation subject system (excluding the physical control layer);
n: a hierarchy to be evaluated;
i: a security function requirement to be evaluated and included in the hierarchy to be evaluated;
x: a hierarchy positioned from the nth layer to the physical control layer;
Pnix: protection effectiveness based on the ith security function requirement in the nth layer against an attack from the xth layer to the nth layer;
Pni: protection effectiveness based on the ith security function requirement in the nth layer against an attack to the evaluation subject system;
Pn: protection effectiveness of the nth layer to be evaluated;
Dn: overall protection effectiveness ranged from the nth layer (to be evaluated) until the physical control layer;
r, p: a reduction rate of the protection effectiveness, where r is more than 0 (0 < r), and p is less than 1 (p < 1).

In step S601, the evaluation calculation unit 5 determines whether or not to receive the security function requirement from the input processing unit 4. On determination to receive the security function requirement from the input processing unit 4, the evaluation calculation unit 5 proceeds to step S602. On determination not to receive the security function requirement from the input processing unit 4, in other words, on determination to receive the combination of the security function requirements from the requirement excess/insufficiency verification unit 6, the evaluation calculation unit 5 proceeds to step 603.

In the step S602, the evaluation calculation unit 5 receives the security function requirement included in each hierarchy from the input processing unit 4. The step S602 corresponds to the step S205 in FIG. 5. In the step S603, the evaluation calculation unit 5 receives the combination of the security function requirements to be evaluated from the requirement excess/insufficiency verification unit 6. The step S603 corresponds to the step S209 in FIG. 5.

In the step S604, in sequential order from a layer closest to the physical control layer,
each layer (nth layer) is extracted as the hierarchy to be evaluated. In an example of FIG. 16, as a first execution in a loop from the step S604 to the step S608, the evaluation calculation unit 5 selects the information/control layer 859, which is positioned closest to the physical control layer 853, as the hierarchy to be evaluated.

In the step S605, the evaluation calculation unit 5 quantitatively evaluates the protection effectiveness Pnix based on the ith security function requirement in the nth layer against an attack from the xth layer to the nth layer. For example, in FIG. 16, the evaluation calculation unit 5 quantitatively evaluates protection effectiveness of an edge 860 (as a first security function requirement in the information/control layer 859) against the attack to the information/control layer 859.

Here, each of a value of the variable i and a value of the variable x may vary. The security function requirement specified by the value of the variable i may be a single security function requirement received in the step S602 or the plurality of (combination of) security requirements received in the step S603.

In the step S606, the evaluation calculation unit 5 quantitatively evaluates the protection effectiveness Pni based on the ith security function requirement in the nth layer against the attack to the evaluation subject system. For example, in FIG. 16, the evaluation calculation unit 5 quantitatively evaluates the protection effectiveness of the edge 860 (as the first security function requirement in the information/control layer 859) against the attack to the evaluation subject system. Here, the value of the variable i may vary.

In the step S607, the evaluation calculation unit 5 moves to an (n + 1)th layer as the hierarchy to be evaluated. Here, the (n + 1)th is set as the nth. For example, in FIG. 16, the evaluation calculation unit 5 moves from the information/control layer 859 to the information layer 863 as the hierarchy to be evaluated.

In the step S608, the evaluation calculation unit 5 determines whether or not the hierarchy to be evaluated is as far as the farthest to the physical control layer, in other words, whether or not n is less than N (n < N). On determination that the hierarchy to be evaluated is as far as the farthest to the physical control layer, the evaluation calculation unit 5 proceeds to the step S609. On determination that the hierarchy to be evaluated is not as far as the farthest to the physical control layer, the evaluation calculation unit 5 returns to the step S604.

Accordingly, in FIG. 16, for example, the evaluation calculation unit 5 determines the information/control layer 859 to the cloud 865 as the hierarchies to be evaluated. When having evaluated the cloud 865, the evaluation calculation unit 5 proceeds to the step S609.

In the step S609, the evaluation calculation unit 5 calculates the protection effectiveness Pn and the overall protection effectiveness Dn. The protection effectiveness Pn of the nth layer to be evaluated is calculated as follows: Pn = MAX (Pnix), where n equals to x (n = x). The overall protection effectiveness Dn ranged from the nth layer (to be evaluated) to the physical control layer is calculated as follows: Dn = Pn + r^{∗}P (n - 1) + p^{∗}P (n - 2) + ... ≈ ΣPn.

In FIG. 16, for example, in the information/control layer 859, the evaluation calculation unit 5 evaluates the protection effectiveness of the edge 860, protection effectiveness of a telemetry communication 861, and protection effectiveness of a basic process control system (BPCS) network 862. Then, the evaluation calculation unit 5 specifies the largest protection effectiveness out of these three results as the protection effectiveness Pn of the information/control layer 859.

Additionally, in FIG. 16, the evaluation calculation unit 5 adds the protection effectiveness of the information/control layer 859 to protection effectiveness of the information layer 863 to gain added protection effectiveness. Then, the evaluation calculation unit 5 specifies the added protection effectiveness as the overall protection effectiveness Dn ranged from the information layer 863 to the physical control layer 853.

In the step S610, the evaluation calculation unit 5 stores results of the quantitative evaluation for each of the security function requirements, the results obtained in the steps S604 to S609, into the evaluation calculation data table 400 of the evaluation calculation DB 9.

In step S611, similarly to the step S601, the evaluation calculation unit 5 determines whether or not the evaluation calculation unit 5 has processed the security function requirement received from the input processing unit 4.

On determination that the evaluation calculation unit 5 has processed the security function requirement received from the input processing unit 4, the evaluation calculation unit 5 proceeds to step S612. On determination that the evaluation calculation unit 5 has not processed the security function requirement received from the input processing unit 4, in other words, on determination that the evaluation calculation unit 5 has processed the combination of the security function requirements received from the requirement excess/insufficiency verification unit 6, the evaluation calculation unit 5 proceeds to step S613.

In the step S612, the evaluation calculation unit 5 displays to the user 109 the results of the quantitative evaluation stored in the step S610 and ends these process steps. The information displayed to the user 109 may be a part of the results of the quantitative evaluation stored in the step S610. The step S612 corresponds to the step S206 in FIG. 5.

In the step S613, the evaluation calculation unit 5 determines whether or not the box of "requirement excess/insufficiency verification" has been ticked in the execution item selection field 800 on the input screen 900. On determination that the box of "requirement excess/insufficiency verification" has been ticked, the evaluation calculation unit 5 proceeds to step S614. On determination that the box of "request excess/insufficiency verification" has not been ticked, the evaluation calculation unit 5 ends these process steps.

In the step S614, the evaluation calculation unit 5 transmits the results of the quantitative evaluation stored in the step S610 to the requirement excess/insufficiency verification unit 6, and ends these process steps. The step S614 corresponds to the step S210 in FIG. 5.

Note that, instead of the evaluation calculation unit 5, an external device connected to the secure function safety evaluation device 1 may execute the quantitative evaluation of the protection effectiveness. The evaluation calculation unit 5 may transmit the information such as the security function requirements to the external device, and then receive the results of the quantitative evaluation from the external device. Here, an item of the quantitative evaluation preferably corresponds to an item of the protection effectiveness targeted. Accordingly, the evaluation calculation unit 5 may receive the protection effectiveness targeted from the input processing unit 4.

Among the process steps above, the step S602 and the steps S604 to S612 correspond to the steps S205 to S206 in FIG. 5. The steps S603 to S611 and the step S614 correspond to the steps S209 to S210 in FIG. 5.

An example of a flowchart of process steps by the requirement excess/insufficiency verification unit 6 of the secure function safety evaluation device 1 will be described with reference to FIG. 9. In these process steps, the requirement excess/insufficiency verification unit 6 verifies whether or not each of the combinations of the security function requirement is sufficient to satisfy the protection effectiveness targeted. The process steps to be described with reference to FIG. 9 are executed when the "requirement excess/insufficiency verification" is selected in the execution item selection field 800 on the input screen 900. Accordingly, prior to step S701, the evaluation calculation unit 5 may determine whether or not the "requirement excess/insufficiency verification" has been selected.

In the step S701, the requirement excess/insufficiency verification unit 6 receives the protection effectiveness targeted from the input processing unit 4. The step S701 corresponds to the step S207 in FIG. 5.

In step S702, the requirement excess/insufficiency verification unit 6 generates each of the combinations of the security function requirements to be evaluated, one combination at a time. The requirement excess/insufficiency verification unit 6 repeats the steps S702 to S707. Here, the security function requirements to be evaluated may correspond to the security function requirements that is stored in the security function requirement 322 of the system structure specification information table 320.

Also, on an assumption that the number of the security function requirements stored in the security function requirement 322 is S, the security function requirements, the number of which is S, may be used to generate each of the combinations. Thus, each of the combinations may include any of two to S of the security function requirements. The combinations of the security function requirements may be generated based on a permutation method or may be generated based on a combination method.

In the step S703, the requirement excess/insufficiency verification unit 6 transmits each of the combinations of the security function requirements generated in the step S702 to the evaluation calculation unit 5. The step S703 corresponds to the step S209 in FIG. 5, and the evaluation calculation unit 5 receives each of the combination of the security function requirements in the step S603.

In step S704, the requirement excess/insufficiency verification unit 6 receives the result of the quantitative evaluation from the evaluation calculation unit 5. The step S704 corresponds to the step S210 in FIG. 5. The result of the quantitative evaluation that the requirement excess/insufficiency verification unit 6 receives corresponds to the result of the quantitative evaluation that the evaluation calculation unit 5 transmits in the step S614.

In the step S705, the requirement excess/insufficiency verification unit 6 compares the protection effectiveness targeted received in the step S701 with the result of the quantitative evaluation received in the step S704, and sees which is larger. In the step S706, based on a result of the comparison in the step S705, the requirement excess/insufficiency verification unit 6 makes a determination as follows. When the protection effectiveness targeted is equal to or more than the result of the quantitative evaluation, the excess/insufficiency verification unit 6 determines that the combination of the security function requirements is sufficient. When the protection effectiveness targeted is less than the result of the quantitative evaluation, the excess/insufficiency verification unit 6 determines that the combination of the security function requirements is insufficient. Then, the excess/insufficiency verification unit 6 stores a result of the determination.

Note that, in the step S706, the requirement excess/insufficiency verification unit 6 may specify a maximum value from results of one or more quantitative evaluations for each of one or more security function requirements in each of one or more hierarchies, the results based on which the combination of the security function requirements is determined as sufficient.

In the step S707, when any of the combinations of the security function requirements generated in the step S702 still remains, the requirement excess/insufficiency verification unit 6 returns to the step S702. When none of the combinations of the security function requirements generated in the step S702 remains, the requirement excess/insufficiency verification unit 6 ends the steps S702 to S707 repeated and proceeds to step S708.

Note that, in a case where a condition to end the steps S702 to S707 repeated is predetermined, for example, in a case where the upper limit number of the determinations that the combination of the security function requirements is sufficient is predetermined, the requirement excess/insufficiency verification unit 6 may follow the condition predetermined to end these steps repeated. In this case, whether any of the combinations remains or not, the requirement excess/insufficiency verification unit 6 may end the process steps S702 to S707 repeated, and proceed to the step S708.

In the step S708, the requirement excess/insufficiency verification unit 6 transmits to the result processing unit 7 the result of the determination saved in the step S706 as the result of the verification. Concurrently, the requirement excess/insufficiency verification unit 6 transmits to the result processing unit 7 the information regarding the combination of the security function requirements that has been determined as sufficient.

The step S708 corresponds to the step S211 in FIG. 5, and the result of the quantitative evaluation may also be transmitted to the result processing unit 7.

Note that, the requirement excess/insufficiency verification unit 6 may store the result of the determination and the combination of the security function requirements in the results DB 11. The combinations of the security function requirements and the result of the determination (verification) are obtained in the process steps above. As a display regarding the information obtained above, a display screen 906 of the recommended result for excess/insufficiency of each of the combinations of the security function requirements will be described later with reference to FIG. 15.

FIG. 14 shows an example of displaying the results of the quantitative evaluations for the evaluation subject system and for each of the security function requirements. A display screen 905 includes an overall system evaluation result field 811 and an each security function requirement detailed evaluation result field 812. The display screen 905 may correspond to a display of the step S212 based on the information transmitted in the step S708.

Further, the display screen 905 may be displayed based on the information acquired from the evaluation calculation data table 400 stored in the evaluation calculation DB 9. The overall system evaluation result field 811 may include the information from the protection effectiveness targeted field 802 on the input screen 901 in FIG. 11.

Further, security function requirements listed in the each security function requirement detailed evaluation result field 812 may not only include "security function requirement 1" and "security function requirement 2", but may also include each of the combinations of the security function requirements generated in the step S702, such as a combination of the "security function requirement 1" and the "security function requirement 2".

The display screen 905 is not limited to the example shown in FIG. 14, and may display only a value of the result of the quantitative evaluation, or may display, in a table format, the information from the evaluation calculation data table 400. Further, the display screen 905 may include alert information to the user, the alert information to be provided when each of the security function requirements is verified as insufficient.

FIG. 15 is a diagram showing an example of displaying the recommended result for excess/insufficiency of each of the combinations of the security function requirements. The display screen 906 may correspond to the display of the step S212 based on the information transmitted in the step S708.

On the display screen 906, for example, in a combination of the "security function requirement 1", the "security function requirement 2", and "security function requirement 4", "o" is displayed in each block of the combination, and "(1)" is displayed as the combination identifier in "combination". The combination has been determined as sufficient in the step S706, and thus is displayed in a column "sufficient" of "system evaluation".

Then, this combination is determined as sufficient and thus may be displayed as a recommended combination. The information displayed as the recommended result for excess/insufficiency of each of the combinations of the security function requirements is not limited to the display screen 906 in FIG. 15. Instead, each of numerical values based on which the verification has been made as sufficient or insufficient, in other words, each of numerical values used in the comparison in the step S705, may be displayed.

With regard to the combination determined/verified as insufficient, when it is possible to generate a modified combination to satisfy the protection effectiveness targeted, the display screen 906 may include information regarding the modified combination. Further, on an assumption that the modified combination is selected, the display screen 906 may display a result of a quantitative evaluation for the modified combination.

As shown in FIG. 15, the display screen 906 may include a button 815. When the button 815 is clicked, the process step S202, i.e., the step S502, is allowed to restart from the input of the protection effectiveness targeted.

As has been described above, in Example 1, it is possible to evaluate the functional safety of the cyber security system. More specifically, it is possible to evaluate the protection effectiveness with respect to a target value of an item that satisfies both a target value of the cyber security system and a target value of the functional safety. Concurrently, it is possible to set up the hierarchy structure in the system that affects the physical control layer related to the functional safety.

Here, it is possible to evaluate the protection effectiveness based on the security function requirement in each of the hierarchies in the system, and thus, it is possible to simplify the evaluation. Further, the overall protection effectiveness of the security function requirements from a specific hierarchy/layer until the physical control layer related to the functional safety is also simply evaluated.

Further, it is possible to determine whether or not the security function requirement evaluated is sufficient alone to satisfy the target value. Accordingly, it is also possible to provide information regarding whether or not a redundant security function requirement exists.

### Example 2

Example 1 has described a preferable example in a case when functional safety system of a cyber security is evaluated in-house. Example 2 is concerned with a case when a functional safety system developed by any of other companies is connected to an in-house network. In Example 2, a preferable example will be described on an assumption that the device is to evaluate whether or not the functional safety system developed by one of other companies satisfies the protection effectiveness targeted to be protective against a cyber attack.

In Example 2, the four databases, i.e., the requirements DB 8, the evaluation calculation DB 9, the verification operation DB 10, and the results DB 11, may be stored in the memory 102 of the secure function safety evaluation device 1. Alternatively, these four databases may be stored in a cloud via the communication device 104.

Further, each unit of the secure function safety evaluation device 1 in FIG. 1 may be an independent computer, and each unit may be configured as a cloud computer system connected via the in-house network.

An example of a sequence in Example 2 will be described with reference to FIG. 5. Note that, any other description but the description below regarding the sequence is the same as the description in Example 1, and a detailed description thereof will be omitted as appropriate. The input unit 2 receives, from the functional safety system developed by the one of other companies (hereinafter, referred to as the other company), the operating environment specification in the step S201 and the protection effectiveness targeted in the step S202. The input unit 2 transmits the information received to the input processing unit 4 via the in-house network.

The input processing unit 4 transmits to a system of the other company a message asking for hierarchy processing in the step S203 via the in-house network and the output unit 3, and the message transmitted is displayed on the system of the other company. The input unit 2 receives, from the functional safety system developed by the other company, the information regarding the structure hierarchized in the step S204, and transmits the information received to the input processing unit 4 via the in-house network.

After the process step S204, the process step S205 and the process steps S207 to S211 are executed in the cloud computers, but are the same as the process steps by the secure function safety evaluation device 1 as described in Example 1.

Additionally, the evaluation calculation unit 5 and the result processing unit 7 respectively transmit the results obtained in the step S206 and the step S212 to the system of the other company via the in-house network and the output unit 3, and the results transmitted respectively are displayed on the system of the other company.

In Example 2, the each single system hierarchy information table 310 used in the step S503 is not stored in the requirements DB 8 but in the cloud computer. Accordingly, it is possible to directly feed back a change in the hierarchy structure to data in the cloud computer and thus to update the data efficiently.

As has been described above, in Example 2, the secure function safety evaluation device 1 developed in-house is not only configured to evaluate the functional safety system developed in-house. Even with the functional safety system developed by other companies, the secure function safety evaluation device 1 developed in-house is configured to evaluate the functional safety and the security system.

### Example 3

Example 1 has described an example where each hierarchy, i.e., each of the physical control layer, the information/control layer, the information layer, and the cloud, is independent. In other words, the information received from the user 109 regarding the structure hierarchized is an example of the structure fully divided into hierarchies. Based on this assumption, the input processing unit 4 completes hierarchizing the structure in the step S505.

In Example 3, each of the hierarchies may affect each other, and thus, the information received from the user 109 regarding the structure hierarchized may be an example of the structure not fully divided into hierarchies. In Example 3, the input processing unit 4 additionally includes a hierarchy verification processing section. The hierarchy verification processing section is configured, in an additional process step between the step S504 and the step S505 in FIG. 6, to verify whether or not the structure is fully hierarchized.

The hierarchy verification processing section determines whether or not the information regarding the structure hierarchized may be further classified, or whether or not the information regarding the structure hierarchized may be further divided into hierarchies.

Then, the hierarchy verification processing section analyzes mutual dependency between each of the hierarchies as well as independence of each of the hierarchies. Based on results of these analyses, the hierarchy verification processing section updates the information regarding the structure hierarchized and increases the number of the hierarchies.

FIG. 16 shows the example of four hierarchies, but when the evaluation subject system is a further massive system, each of the hierarchies may more likely interfere with the others. For example, the information/control layer 859 may interfere with a part of the physical control layer 853, causing each of the information/control layer 859 and the physical control layer 853 not to be segregated as an independent hierarchy/layer.

In this condition, the hierarchy verification processing section analyzes dependency between the information/control layer 859 and the physical control layer 853. In FIG. 16, the information/control layer 859 is a single hierarchy, but here, the hierarchy verification processing section divides the information/control layer 859 into a plurality of hierarchies to segregate the information/control layer 859 as an independent hierarchy/layer from the physical control layer 853.

As has been described above, in Example 3, it is possible to have an extendable, massive system fully hierarchized. Accordingly, in a quantitative evaluation for each of the hierarchies, it is possible to eliminate its interference with the other hierarchies and thus to improve accuracy of the quantitative evaluation.

### Reference Signs List

- 1: secure function safety evaluation device
- 2: input unit
- 3: output unit
- 4: input processing unit
- 5: evaluation calculation unit
- 6: requirement excess/insufficiency verification unit
- 7: result processing unit
- 8: requirements DB
- 9: evaluation calculation DB
- 10: verification operation DB
- 11: results DB

## Claims

1. A security evaluation server comprising:
a hierarchy generation unit configured to generate information regarding a plurality of system hierarchies in an evaluation subject system;
an evaluation unit configured to, based on the information regarding the plurality of system hierarchies generated by the hierarchy generation unit, calculate a first evaluation value of protection effectiveness based on a security function requirement included in each of the plurality of system hierarchies, and calculate a second evaluation value of protection effectiveness based on a combination of the security function requirements; and
a verification unit configured to verify whether each of the security function requirements in the evaluation subject system is in excess or insufficient, based on the first evaluation value calculated by the evaluation unit, the second evaluation value calculated by the evaluation unit, and a target value.

2. The security evaluation server according to claim 1, wherein
the hierarchy generation unit generates the information regarding the plurality of system hierarchies,
the plurality of system hierarchies including:
a first system hierarchy related to functional safety;
a second system hierarchy configured to transmit and receive data to and from the first system hierarchy; and
an (n + 1)th system hierarchy configured to transmit and receive the data to and from the (n)th system hierarchy, (n)th increased in a sequential order from the second hierarchy (n ≥ 2).

3. The security evaluation server according to claim 2, wherein
the evaluation unit is configured to:
in the sequential order from the second system hierarchy to the (n)th system hierarchy, calculate the first evaluation value of the protection effectiveness in each of the system hierarchies based on the security function requirement included in each of the system hierarchies; and
based on the first evaluation value of the protection effectiveness in each of the system hierarchies calculated, calculate the first evaluation value of overall protection effectiveness within a range from the first system hierarchy to the (n)th system hierarchy.

4. The security evaluation server according to claim 3, wherein
the verification unit determines that each of the security function requirements is sufficient when a corresponding one of the second evaluation values calculated by the evaluation unit is equal to or more than the target value.

5. The security evaluation server according to claim 3, wherein
the verification unit determines that each of the security function requirements is insufficient when a corresponding one of the second evaluation values calculated by the evaluation unit is less than the target value.

6. The security evaluation server according to claim 4, wherein
when each of the security function requirements is determined as sufficient, the verification unit specifies a maximum value of the first evaluation values, based on which the corresponding one of the second evaluation values has been calculated and determined as sufficient.

7. The security evaluation server according to claim 2, wherein
the hierarchy generation unit receives an input of a target value of an item that concurrently satisfies a target value of a functional safety requirement and the target value of the security function requirement, and
the evaluation unit calculates the first evaluation value of the protection effectiveness in each of the system hierarchies in an item corresponding to the item including the target value received through the input.

8. The security evaluation server according to claim 3, wherein
the first system hierarchy corresponds to a physical control layer.

9. The security evaluation server according to claim 1, wherein
the hierarchy generation unit receives a system specification, and generates the information regarding the plurality of system hierarchies based on a system type included in the system specification received.

10. The security evaluation server according to claim 1, wherein
the hierarchy generation unit receives an operation configured to specify each of the plurality of system hierarchies, and generates the information regarding the plurality of system hierarchies in accordance with the operation received.

11. A security evaluation method executed by a server,
the server including:
a CPU; and
a storage device where a program is stored,
the CPU configured to execute the program stored in the storage device,
the security evaluation method comprising the steps of:
generating information regarding a plurality of system hierarchies in an evaluation subject system;
calculating a first evaluation value of protection effectiveness based on a security function requirement included in each of the plurality of system hierarchies and calculating a second evaluation value of protection effectiveness based on a combination of the security function requirements, based on the information regarding the plurality of system hierarchies generated;
verifying whether each of the security function requirements in the evaluation subject system is in excess or insufficient, based on the first evaluation value calculated, the second evaluation value calculated, and a target value.

12. The security evaluation method according to claim 11, wherein
the CPU generates the information regarding the plurality of system hierarchies,
the plurality of system hierarchies including:
a first system hierarchy related to functional safety;
a second system hierarchy configured to transmit and receive data to and from the first system hierarchy; and
an (n + 1)th system hierarchy configured to transmit and receive the data to and from the (n)th system hierarchy, (n)th increased in a sequential order from the second hierarchy (n ≥ 2).

13. The security evaluation method according to claim 12, wherein
the CPU is configured to:
in the sequential order from the second system hierarchy to the (n)th system hierarchy, calculate the first evaluation value of the protection effectiveness in each of the system hierarchies based on the security function requirement included in each of the system hierarchies; and
based on the first evaluation value of the protection effectiveness in each of the system hierarchies calculated, calculate the first evaluation value of overall protection effectiveness within a range from the first system hierarchy to the (n)th system hierarchy.

14. The security evaluation method according to claim 12, wherein
the CPU receives an input of a target value of an item that concurrently satisfies a target value of a functional safety requirement and the target value of the security function requirement, and calculates the first evaluation value of the protection effectiveness in each of the system hierarchies in an item corresponding to the item including the target value received through the input.
